# EUROPEAN PATENT SPECIFICATION

(11) **EP 4 503 159 B1**
(45) Date of publication and mention of the grant of the patent: **26.08.2026**
(21) Application number: 23903897.9
(22) Date of filing: 08.12.2023
(51) Int. Cl.: H01M 4/04, H01M 4/1393, H01M 4/583, B05C 5/02, B05C 11/10, H01M 4/02, H01M 10/0525, B05C 9/06

(54) **SECONDARY BATTERY ANODE MANUFACTURING APPARATUS**
VORRICHTUNG ZUR HERSTELLUNG EINER SEKUNDÄRBATTERIEANODE
APPAREIL DE FABRICATION D'ANODE DE BATTERIE SECONDAIRE

(30) Priority: 15.12.2022 KR 20220175563
(43) Date of publication of application: 05.02.2025
(73) Proprietor: LG Energy Solution, Ltd., Seoul 07335 (KR)
(72) Inventor: CHO, Jin Ho, Daejeon 34122 (KR); KIM, Young Gon, Daejeon 34122 (KR); YOON, Jong Su, Daejeon 34122 (KR); JEON, Shin Wook, Daejeon 34122 (KR); LEE, Taek Soo, Daejeon 34122 (KR)
(74) Representative: Plasseraud IP
(86) International application number: PCT/KR2023/020178
(87) International publication number: WO 2024/128694

(56) References cited:
- EP-A1- 3 578 272
- EP-A1- 4 503 156
- WO-A1-2022/060177
- JP-A- 2003 197 189
- JP-A- 2004 220 926
- KR-A- 20130 108 460
- KR-A- 20180 065 385
- KR-A- 20220 016 782
- US-A1- 2014 065 478
- US-A1- 2019 190 010

## Description

### [Technical Field]

The present disclosure relates to a negative electrode manufacturing device for secondary battery and a manufacturing method of a negative electrode for secondary battery using the same.

### [Background Art]

Recently, secondary batteries have been widely applied not only in small devices such as portable electronics, but also in medium and large devices such as battery packs or power storage device in hybrid or electric vehicles.

Such a secondary battery refers to a chargeable and dischargeable power generating device comprising a stacked structure of a positive electrode/separator/negative electrode. Generally, the positive electrode includes a lithium metal oxide as a positive electrode active material, and the negative electrode includes a carbon-based negative electrode active material such as graphite, such that when the secondary battery is charged, lithium ions emitted from the positive electrode are adsorbed into the carbon-based negative electrode active material of the negative electrode, and when the secondary battery is discharged, lithium ions contained in the carbon-based negative electrode active material are adsorbed into the lithium metal oxide of the positive electrode, and charge and discharge are repeated.

The negative electrode active materials used in the negative electrode include graphite materials such as natural graphite and artificial graphite. Such graphite has a layered structure and is formed by stacking a plurality of layers in which carbon atoms form a network structure spread in a planar shape. During charging, lithium ions can move from the edges of these graphite layers (the side where the layers overlap) and diffuse between the layers, and during discharging, lithium ions can dissociate and be released from the edges of the layers. In addition, since graphite has a lower electrical resistance in the side direction of the layer than in the stacked direction of the layer, a conduction path of diverted electrons is formed along the side direction of the layer.

In this regard, in a lithium secondary battery using graphite, a technology for magnetically orienting graphite contained in a negative electrode to improve the charging performance of the negative electrode has been conventionally proposed. Specifically, it has a configuration in which the [0,0,2] crystal faces of the graphite are oriented so that they are approximately vertical with respect to the current collector in a magnetic field at the time of forming the negative electrode and are fixed therein. In this case, since the edge of the graphite layer faces the positive electrode active layer, the insertion dissociation of the lithium ions is carried out smoothly and the conduction path of the electrons is shortened, which can improve the electronic conductivity of the negative electrode, thereby improving the charging performance of the battery.

Such an orientation of the graphite can be induced by applying a graphite-containing negative electrode slurry on the current collector and applying a magnetic field to the undried negative electrode slurry. However, in mass production of actual negative electrodes, it is difficult to secure sufficient time for applying a magnetic field to induce graphite alignment of the negative electrode slurry considering the production speed. In addition, if the intensity of the magnetic field applied to the negative electrode slurry applied to the electrode sheet is increased to solve this problem, the phenomenon of attraction of the graphite by the magnetic field occurs at the end of the magnetic field, and the orientation of the graphite aligned perpendicularly to the metal sheet collapses, resulting in a low orientation of the graphite in the final manufactured negative electrode active layer.

Therefore, there is a need for a negative electrode manufacturing technology that can realize a high orientation degree of graphite and is applicable to mass production of negative electrodes for secondary batteries.

### [Related Art Document]

### [Patent Document]

Korean Patent Laid-Open Publication No. 10-2018-0048131
EP 4 503 156 A1 discloses a negative electrode manufacturing device for secondary battery. WO 2022060177 A1 discloses a dual slot die coater and electrode active material slurry coating method using the same. US 2014/0065478 A1 discloses a nonaqueous electrolyte secondary battery and manufacturing method thereof. JP 2003197189 A discloses a manufacturing method for graphite containing composition, manufacturing method for negative electrode for lithium secondary battery, and manufacturing method for lithium secondary battery.

### [Disclosure]

### [Technical Problem]

The present disclosure is directed to provide a negative electrode manufacturing technology that can realize a high degree of crystal orientation of a carbon-based negative electrode active material such as graphite contained in a negative electrode active layer, and at the same time is applicable to mass production of negative electrodes for secondary batteries.

### [Technical Solution]

To solve the problems described above,
an aspect of the present invention provides,
a device for manufacturing an electrode sheet on which a negative electrode slurry containing a carbon-based negative electrode active material comprising graphite is applied to an electrode sheet,
the negative electrode manufacturing device for a secondary battery, comprising:
   a dual slot die including an upper block, a middle block, and a lower block, a first slot provided through a gap between the upper block and the middle block and discharging a first negative electrode slurry, and a second slot provided through a gap between the middle block and the lower block and discharging a second negative electrode slurry; and
   a coating roll opposite the first and second slots of the dual slot die and transferring an electrode sheet coated with the negative electrode slurry discharged from each slot,
   wherein the upper block, the middle block, and the lower block comprise an upper lip, a middle lip, and a lower lip forming an outlet at each front end, and the upper lip, the middle lip, and the lower lip exhibit magnetism of the same polarity; and
   wherein the coating roll exhibits a magnetism of a polarity opposite to the polarity of the magnetism of the upper lip to provide a negative electrode manufacturing device for secondary battery.

In this case, the upper lip and the lower lip may have a structure including at least one of a permanent magnet and an electromagnet, whereby a magnetic field having an intensity of 500G to 3,000G can be applied upon discharging the negative electrode slurry.

Further, the dual slot die may satisfy the following Equation 1: ${G}_{lip} / {G}_{roll} \leq 1$

(In Equation 1,
Gₗᵢₚ represents the magnetic field strength or intensity (in G) applied to the upper lip, middle lip, and lower lip,
Gᵣₒₗₗ represents the magnetic field intensity (in G) applied to the coating roll).

Further, the negative electrode manufacturing device may further include a drying part for drying the negative electrode slurry applied to the electrode sheet.

Also, the drying part may be disposed in a position such that the negative electrode slurry discharged from the slot die can be reached within 20 seconds from the time it is applied to the electrode sheet.

Further, in one embodiment,
a method of manufacturing a negative electrode for secondary battery comprising:
applying a magnetically applied negative electrode slurry to an electrode sheet using a negative electrode manufacturing device according to an aspect of the present invention,
wherein the negative electrode slurry comprises a carbon-based negative electrode active material.

In this case, an average thickness of the negative electrode slurry applied to the electrode sheet may be greater than a separation distance between the slot of the slot die provided in the negative electrode manufacturing device and the coating roll, and the average thickness of the negative electrode slurry applied to the electrode sheet may be 100 µm or more.

Further, applying the negative electrode slurry to the electrode sheet may be performed at a speed of 5 m/min to 100 m/min.

In addition, applying the negative electrode slurry to the electrode sheet may further include drying the applied negative electrode slurry to form a negative electrode active layer after applying the negative electrode slurry to the electrode sheet.

Here, the negative electrode active layer may have an alignment degree (O.I.) of the carbon-based negative electrode active material with respect to the surface of the electrode sheet of 0.9 or less, represented by the following Equation 2: $O . I . = {I}_{004} / {I}_{110}$ in Equation 2,
I₀₀₄ indicates the area of the peak representing the [0,0,4] crystal face in an X-ray diffraction spectroscopy (XRD) measurement of the negative electrode active layer,
I₁₁₀ indicates the area of the peak representing the [1,1,0] crystal face in an X-ray diffraction spectroscopy (XRD) measurement of the negative electrode active layer.

### [Advantageous Effects]

The negative electrode manufacturing device for secondary battery according to an aspect of the present invention can be applied in a state in which a carbon-based negative electrode active material in a discharged negative electrode slurry is oriented close to perpendicular to a surface of a current collector. Accordingly, the manufactured negative electrode has the advantage of not only having an excellent degree of orientation of the carbon-based negative electrode active material, but also of easily being applied to a mass production process.

### [Brief Description of the Drawings]

FIG. 1 is a schematic cross-sectional view illustrating a negative electrode manufacturing device for secondary battery according to an aspect of the present invention.

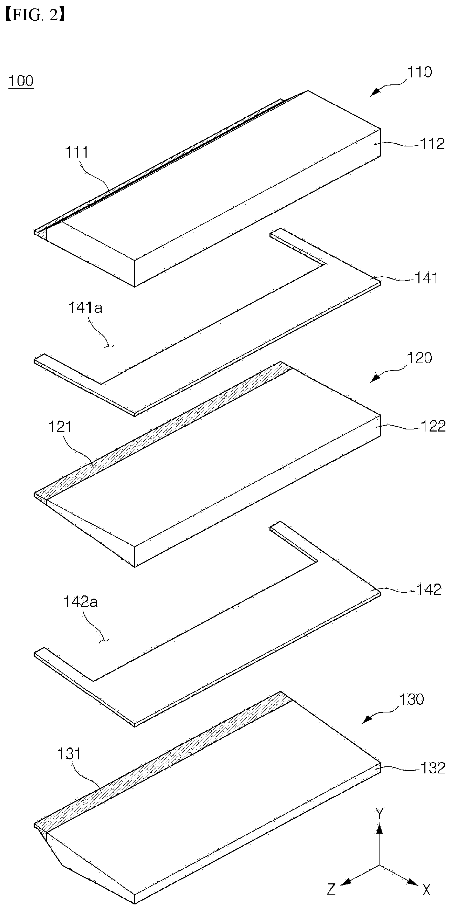

FIG. 2 is a perspective view illustrating a structure of a dual die coater provided in a negative electrode manufacturing device for secondary battery according to an aspect of the present invention.
FIG. 3 is a conceptual diagram illustrating a principle by which a carbon-based negative electrode active material of a negative electrode slurry is applied to an electrode sheet in a self-aligned state by a dual die coater according to an aspect of the present invention.

### [Detailed Description]

The present invention may have various modifications and various embodiments, and thus specific embodiments thereof will be described in detail below.

However, it should be understood that the present invention is not limited to the specific embodiments, and includes all modifications, equivalents, or alternatives within the technical scope of the present invention.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present invention, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

In addition, in an embodiment of the present invention, "including as a major component" can mean including at least 50 wt.% (or at least 50 vol.%), at least 60 wt.% (or at least 60 vol.%), at least 70 wt.% (or at least 70 vol.%), at least 80 wt.% (or at least 80 vol.%), at least 90 wt.% (or at least 90 vol.%), or at least 95 wt.% (or at least 95 vol.%) of a defined component relative to the total weight (or the total volume) of the negative electrode active material. For example, "comprising graphite as a primary component as a negative electrode active material" may mean including at least 50 wt.%, at least 60 wt.%, at least 70 wt.%, at least 80 wt.%, at least 90 wt.%, or at least 95 wt.% of graphite, based on the total weight of the negative electrode active material, and in some cases may mean that the entire negative electrode active material is graphite, comprising at least 100 wt.% of graphite.

Further, in an embodiment of the present invention, the "lip part" is an area including the upper lip of the upper block, the middle lip of the middle bullock, and the lower lip of the lower block, and may include a space formed between the lips, that is, the area in which each lip is disposed in the first slot and the second slot. Similarly, in an embodiment of the present invention, "body part" refers to an area including an upper body of an upper block, a middle body of a middle block, and a lower body of a lower block. The body part may include the space formed between the bodies, that is, the area in which each body is disposed in the first slot and the second slot.

Hereinafter, an embodiment of the present invention will be described in more detail.

### Negative Electrode Manufacturing Device for Secondary Battery

An embodiment of the present invention provides,
a device for manufacturing an electrode sheet on which a negative electrode slurry containing a carbon-based negative electrode active material is applied,
the negative electrode manufacturing device for a secondary battery, comprising:
   a dual slot die including an upper block, a middle block, and a lower block, a first slot arranged through a gap between the upper block and the middle block and discharging a first negative electrode slurry, and a second slot arranged through a gap between the middle block and the lower block and discharging a second negative electrode slurry; and
   a coating roll opposite the first and second slots of the dual slot die and transferring an electrode sheet coated with the negative electrode slurry discharged from each slot,
   wherein the upper block, the middle block and the lower block comprise an upper lip, a middle lip and a lower lip forming an outlet at each front end, and the upper lip, middle lip and lower lip exhibit magnetism of the same polarity; and
   wherein the coating roll exhibits a magnetism of a polarity opposite to the polarity of the magnetism of the upper lip to provide a negative electrode manufacturing device for secondary battery.

The negative electrode manufacturing device for secondary battery according to an embodiment of the present invention is a device applied to manufacture a negative electrode used in a secondary battery, and has a configuration for manufacturing an electrode sheet by applying a negative electrode slurry containing a carbon-based negative electrode active material onto a current collector.

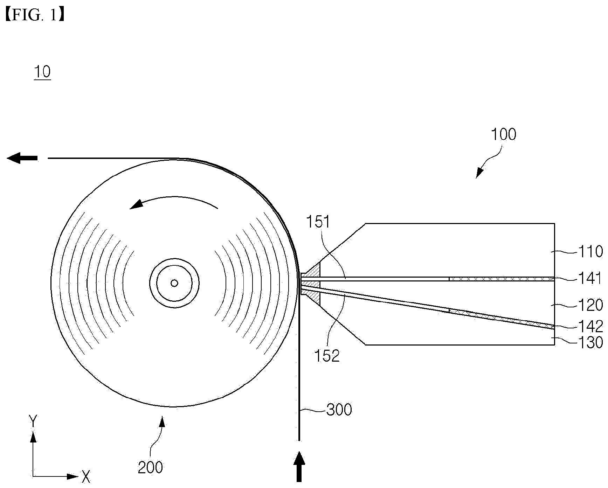

Specifically, FIG. 1 is a schematic cross-sectional view of a structure of a negative electrode manufacturing device for secondary battery according to an embodiment of the present invention. Referring to FIG. 1, the negative electrode manufacturing device 10 comprises a dual slot die 100 and a coating roll 200, and has a structure in which a negative electrode slurry is applied to a surface while an electrode sheet 300 is moved by rotation of the coating roll 200.

The dual slot die 100 has a first slot 151 and a second slot 152, so that two types of negative electrode slurries, the same or different, can be applied dually on the current collector. As shown in FIG. 1, the first slot 151 may be formed between where the upper die 110 and the middle die 120 face each other, and the second slot 152 may be formed between where the middle die 120 and the lower die 130 face each other.

For example, the dual slot die 100 may comprise a first spacer 141 and a second spacer 142 sequentially interposed between the upper die 110 and the middle die 120, and between the middle die 120 and the lower die 130 such that a gap is provided between them to form passages, in other words, slots 151 and 152, through which the negative electrode slurry can fluidly move are formed. In this case, the upper and lower height of the slots may be determined by the thickness (in the Y-axis direction) of the first spacer 141 and/or the second spacer 142 embodying the gap between each die.

The thickness of the first spacer 141 and/or the second spacer 142 may be controlled according to the use or capacity of the secondary battery. Specifically, the thickness of each spacer 141 and 142 may independently be from 50 µm to 2,000 µm, and more specifically, may be from 50 µm to 1,500 µm; from 500 µm to 1,200 µm; from 800 µm to 1,200 µm; from 80 µm to 200 µm; from 200 µm to 500 µm; or from 400 µm to 700 µm.

In addition, the first spacer 141 and/or the second spacer 142 may have an opening 130a in which a first region is defined, and may be interposed in all but one of the respective opposing rim regions of the upper die 110, the middle die 120, and the lower die 130. Accordingly, the discharge slots, in other words, the first slot 151 and the second slot 152, through which the negative electrode slurry can be discharged to the outside, are formed only between the front ends of the upper die 110, the middle die 120, and the lower die 130. Here, each front end of the upper die 110, the middle die 120, and the lower die 130 includes an upper lip 111, a middle lip 121, and a lower lip 131, and the slots 151 and 152 through which the negative electrode slurry is discharged are formed by spacing between the respective lips 111, 121, and 131.

Further, the first spacer 141 and second spacer 142 are preferably made of a material having a sealing property by functioning as a gasket to prevent the negative electrode slurry from leaking into the gap between each of the dies 110, 120 and 130, except in the region where the first slot 151 and the second slot 152 are formed.

Meanwhile, the upper die 110, middle die 120 and lower die 130 may include an upper lip 111, a middle lip 121 and a lower lip 131 located at their respective front ends, together with an upper body 112, a middle body 122 and a lower body 132 extending from each lip and in close contact with a first spacer 141 and/or a second spacer 142 to form a passageway through which the negative electrode slurry can fluidly move.

Further, the upper lip 111, middle lip 121, and lower lip 131 may exhibit magnetism. Specifically, the upper lip 111, the middle lip 121, and the lower lip 131 may exhibit magnetism having the same polarity, and accordingly, a magnetic field may be formed in the first slot 151 and the second slot 152 formed by each of the lips 111, 121, and 131 in the same direction as the direction in which the negative electrode slurry is discharged.

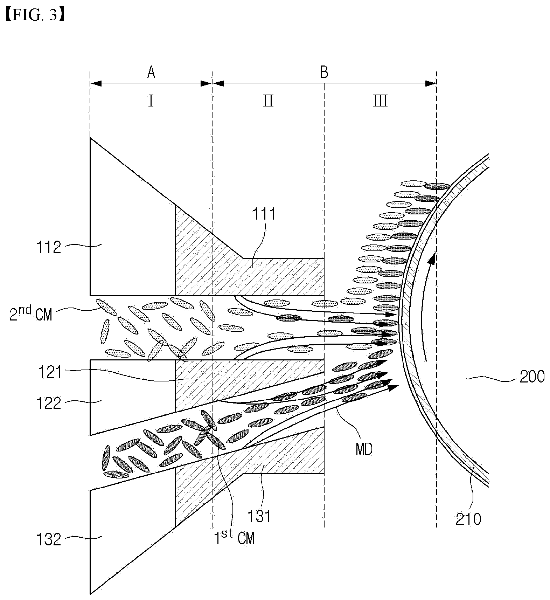

As shown in FIG. 3, if the path along which the negative electrode slurry is discharged and applied is divided into an unoriented section A and an oriented section B, the carbon-based negative electrode active material (CM, e.g., graphite) of the negative electrode slurry is not affected by the magnetic field in the unoriented section A, including the space (in other words, I: body part) between the bodies 112, 122, and 132 of each die, and thus moves in a state having a high degree of freedom. However, in the oriented section B including the space between the upper lip 111, the middle lip 121, and the lower lip 131, which exhibit magnetism of the same polarity (in other words, II: lip part), a magnetic field direction (MD) may be formed in the same direction as the direction in which the negative electrode slurry is discharged due to the application of a repulsive force. Accordingly, before the negative electrode slurry is applied to the negative electrode current collector, the carbon-based negative electrode active material (CM), in other words, graphite, contained in the negative electrode slurry may be oriented such that the [0,0,2] crystal faces are approximately vertical with respect to the negative electrode current collector. Since the graphite so oriented is applied on the current collector while remaining oriented (in other words, corresponding to the III: coating region), it can have a high degree of orientation without any magnetic field application after application of the negative electrode slurry.

In this case, the upper lip 111, middle lip 121, and lower lip 131 may include electromagnets and/or permanent magnets to indicate magnetism. The electromagnets may include both direct current electromagnets and alternating current electromagnets. Further, the permanent magnets may include both magnets having ferromagnetic properties and magnets having soft magnetic properties, including NdFeB-based magnets, SmCo-based magnets, Ferrite magnets, Alnico magnets, FeCrCo-based magnets, Bond magnets (Nd-Fe-B, Sm-Fe-N, Sm-Co, Ferrite), and the like.

Further, since the negative electrode manufacturing device applies a magnetic field before the negative slurry is applied to the electrode sheet, a magnetic field of a weaker intensity can be applied compared to a case where the magnetic field is applied after the negative slurry is applied to the electrode sheet. The magnetic field strength at this time can satisfy a predetermined range. In other words, the upper lip 111, the middle lip 121, and the lower lip 131 may be subjected to a magnetic field satisfying a predetermined range of intensity at the time of discharging the negative electrode slurry. Specifically, the upper lip 111, the middle lip 121, and the lower lip 131 may be subjected to the same magnetic field. In this case, the applied magnetic field may have a strength of 500 G to 3,000 G (Gauss), or more specifically, 500 G to 2,500 G; 500 G to 2,000 G; 500 G to 1,500 G; 1,000 G to 2,000 G; 2,000 G to 2,500 G; 2,000 G to 3,000 G; or 500 G to 900 G.

An embodiment of the present invention can realize a uniform crystal orientation of the carbon-based negative electrode active material before the negative electrode slurry is discharged through the first slot 151 and the second slot 152 by adjusting the intensity of the magnetic field applied at the upper lip 111, the middle lip 121, and the lower lip 131 to the above range. In addition, the negative electrode manufacturing device can maintain the degree of orientation so that the uniformly crystal-oriented carbon-based negative electrode active material is applied on the current collector without a change in the degree of orientation after being discharged. In addition, an embodiment of the present invention can prevent the intensity of the magnetic field applied at the upper lip 111, the middle lip 121, and the lower lip 131 from exceeding the above range such that the separation distance between the lips becomes narrow and the discharge of the negative electrode slurry becomes difficult.

The first slot 151 and the second slot 152 may be positioned such that the negative electrode slurry is discharged perpendicular to the surface of the negative current collector. For this, the dual slot die 100 may be positioned to be perpendicular to the surface of the electrode sheet 300. Preferably, the negative electrode manufacturing device of an embodiment of the present invention may comprise a rotatably arranged coating roll 200 facing the first slot 151 and the second slot 152 of the dual slot die 100, as shown in FIG. 1, such that the electrode sheet 300, or negative electrode current collector, may move with the rotation of the coating roll 200 and the negative slurry may be applied to its surface.

Further, the coating roll 200 may exhibit magnetism on its surface to allow the carbon-based negative electrode active material of the negative electrode slurry applied to the electrode sheet 300 to remain oriented inside the dual slot die 100. In this case, the magnetism may have a different polarity from the lip parts 111, 121 and 131 of the dual slot die 100. An embodiment of the present invention can prevent the crystal orientation of the carbon-based negative electrode active material applied to the surface of the electrode sheet 300 from being reduced by imparting a magnetism having a different polarity from the lip parts 111, 121 and 131 of the dual slot die 100 to the surface of the coating roll 200. Such magnetism may be realized by introducing one or more of a permanent magnet and an electromagnet to the surface of the coating roll 200.

Further, the magnetic field applied to the coating roll 200 may be stronger than the magnetic field strength applied at the lip parts 111, 121, and 131 of the dual slot die 100 such that the crystal orientation of the carbon-based negative electrode active material in the cathode slurry remains unchanged and can be applied onto the electrode sheet 300, or negative electrode current collector. As one example, the coating roll 200 may satisfy Equation 1 below: ${G}_{lip} / {G}_{roll} \leq 1$ in Equation 1,
Gₗᵢₚ indicates a magnetic field intensity (unit: G) applied to the upper lip, the middle lip, and the lower lip,
Gᵣₒₗₗ indicates the magnetic field intensity (unit: G) applied to the coating roll.

When a magnetic field is strongly applied to the lip part of the dual slot die 100, the replulsive force between the upper lip 111, the middle lip 121, and the lower lip 131 is strongly applied, and the height of the slots is not uniform, so the magnetic field applied to the lip part of the dual slot die 100 is controlled to satisfy a predetermined range as mentioned above. However, in this case, the crystal orientation of the carbon-based negative electrode active material which was oriented according to the fluid momentum and/or direction of the negative electrode slurry at the time of discharge of the negative electrode slurry may change. Accordingly, the negative electrode manufacturing device of an embodiment of the present invention has a configuration in which a magnetic field is applied to a coating roll 200 disposed on the other side of the electrode sheet 300 (or current collector) to which the negative electrode slurry is applied with a polarity opposite to the magnetic field applied at the lip part, but with a magnetic field applied with a magnitude greater than the magnitude of the magnetic field applied at the lip part. Accordingly, the carbon-based negative electrode active material can be applied to the surface of the electrode sheet 300, or the negative electrode current collector, such that the crystal face is close to perpendicular. At this time, the coating roll 200 may satisfy the above equation 1 with a Gₗᵢₚ/Gᵣₒₗₗ of 1 or less (in other words, Gₗᵢₚ/Gᵣₒₗₗ ≤ 1), specifically, 0.1 to 1 (in other words, 0.1 ≤ Gₗᵢₚ/Gᵣₒₗₗ ≤ 1), 0.2 to 0.9 (i.e., 0.2 ≤ Gₗᵢₚ/Gᵣₒₗₗ ≤ 0.9), 0.4 to 0.9 (i.e., 0.4 ≤ Gₗᵢₚ/Gᵣₒₗₗ ≤ 0.9), 0.3 to 0.6 (i.e., 0.3 ≤ Gₗᵢₚ/Gᵣₒₗₗ ≤ 0.6), 0.5 to 0. 9 (i.e., 0.5 ≤ Gₗᵢₚ/Gᵣₒₗₗ ≤ 0.9), 0.51 to 0.99 (i.e., 0.51 ≤ Gₗᵢₚ/Gᵣₒₗₗ ≤ 0.99), 0.70 to 0.99 (i.e., 0.70 ≤ Gₗᵢₚ/Gᵣₒₗₗ ≤ 0.99), 0.90 to 0.99 (i.e., 0. 90 ≤ Gₗᵢₚ/Gᵣₒₗₗ ≤ 0.99), 0.6 to 0.8 (i.e., 0.6 ≤ Gₗᵢₚ/Gᵣₒₗₗ ≤ 0.8), or 0.45 to 0.75 (i.e., 0.45 ≤ Gₗᵢₚ/Gᵣₒₗₗ ≤ 75).

In an embodiment of the present invention, by providing a coating roll 200 satisfying Equation 1 in the above-described range, can prevent the crystal faces of the carbon-based negative electrode active material from being oriented at a low angle with respect to the surface of the electrode sheet 300, the negative electrode current collector, due to an insignificant magnetic field application intensity of the coating roll 200, and meanwhile, prevent the productivity of cathode manufacturing from being reduced due to an excessive magnetic field application intensity.

Further, the negative electrode manufacturing device 10 according to an embodiment of the present invention may further include a drying part (not shown) for drying the negative electrode slurry applied to the electrode sheet 300, wherein the drying part may be disposed in a position such that the negative electrode slurry discharged from the slot die 100 reaches the electrode sheet within 20 seconds from the time it is applied to the electrode sheet, specifically 0.01 seconds to 20 seconds; 0.01 seconds to 15 seconds; 0.01 seconds to 10 seconds; or 0.01 seconds to 5 seconds.

The drying part performs the function of removing the solvent contained in the negative electrode slurry to form a negative electrode active layer, and also performs the function of fixing the carbon-based negative electrode active material oriented inside the negative electrode slurry. For this, the drying part may be arranged in a position to dry the negative electrode slurry before the crystal orientation of the carbon-based negative electrode active material applied to the surface of the electrode sheet 300 is reduced.

In addition, the drying part is formed by including a wall (not shown) that blocks the periphery except for the inlet and outlet for bringing in and taking out the electrode sheet 300 to which the negative electrode slurry is applied, and a dryer (not shown) for drying the electrode sheet on the wall of the side from which the electrode sheet 300 to which the negative electrode slurry is applied is taken out.

When the electrode sheet 300 on which the negative electrode slurry is applied enters through the inlet of the drying part, it receives energy such as light, wavelength, heat, etc. supplied from the opposite wall. Therefore, the wall is preferably made of an insulating material so that the energy inside can be transferred to the outside and prevent heat loss from occurring.

Further, the dryer can be used without being particularly limited as long as it is capable of applying energy such as light, wavelength, heat, and the like and is conventionally applied in the art. For example, the dryer may be used as an ultraviolet dryer, a near-infrared dryer, a far-infrared dryer, a hot air dryer, a vacuum oven, or the like, singly or in combination.

The negative electrode manufacturing device according to an embodiment of the present invention has the above-described configuration to induce crystal orientation of the carbon-based negative electrode active material before the negative electrode slurry is discharged onto the negative electrode sheet, so that the carbon-based negative electrode active material can be applied in a state in which the carbon-based negative electrode active material is oriented close to perpendicular to the surface of the negative electrode current collector. Accordingly, the carbon-based negative electrode active material of the manufactured negative electrode has an excellent degree of orientation. Furthermore, since the above negative electrode manufacturing device does not require a separate orientation process for orienting the carbon-based negative electrode active material after applying the negative electrode slurry, it has the advantage of not requiring additional facilities for manufacturing the negative electrode, as well as being easy to apply to a mass production process.

### Manufacturing Method of Negative Electrode for Secondary Battery

An embodiment of the present invention also provides,
a method of manufacturing a negative electrode for secondary battery comprising:
applying a magnetically applied negative electrode slurry to an electrode sheet using a negative electrode manufacturing device according to an embodiment of the present invention,
wherein the negative electrode slurry comprises a carbon-based negative electrode active material.

The manufacturing method of a negative electrode for secondary battery according to an embodiment of the present invention is a method of manufacturing a negative electrode using the negative electrode manufacturing device of an embodiment of the present invention described above, including applying a magnetically applied negative electrode slurry to an electrode sheet. In other words, the manufacturing method is characterized in that the magnetic field application to the negative electrode slurry containing a carbon-based negative electrode active material and the application of the negative electrode slurry on the electrode sheet (i.e., the current collector) proceed simultaneously. Accordingly, the above manufacturing method has the advantage of not separately proceeding with the crystal orientation of the carbon-based negative electrode active material after the application of the negative electrode slurry, and thus is economical because the process is simple, and is easy to apply to mass production because of its excellent processability.

Here, the negative electrode slurry may contain a carbon-based negative electrode active material which is magnetically oriented by the negative electrode manufacturing device according to an embodiment of the present invention as described above. Further, the magnetic orientation may be accomplished by forming a magnetic field perpendicular to the surface of the electrode sheet prior to the negative electrode slurry being discharged onto the electrode sheet.

Further, the manufacturing method may control a spacing distance between the slots of the slot die provided in the negative electrode manufacturing device, in other words, the lip part including the upper lip, the middle lip, and the lower lip, and the coating roll according to the average thickness of the negative electrode slurry to be applied to the electrode sheet so that the crystal orientation of the carbon-based negative electrode active material is maintained. Even if the carbon-based negative electrode active material is oriented before discharging so that a particular crystal face has a predetermined angle with respect to the surface of the electrode sheet, the angle or degree of orientation may change depending on the fluid motion according to the angle at which the negative electrode slurry is applied to the surface of the electrode sheet at the time of discharging.

Therefore, according to an embodiment of the present invention, the average thickness of the negative electrode slurry applied to the electrode sheet may be adjusted to be greater than a separation distance between the lip part of the slot die and the coating roll provided in the negative electrode manufacturing apparatus in order to minimize the fluid motion depending on the angle at which the negative electrode slurry is applied. For example, the average thickness of the negative electrode slurry applied to the electrode sheet may be adjusted to be 1.01 to 2.00 times; 1.01 to 1.80 times; 1.01 to 1.50 times; 1.1 to 1.5 times; or 1.2 to 1.9 times the spacing distance between the lip part of the slot die provided in the negative electrode manufacturing device and the coating roll.

Further, applying the magnetically applied negative electrode slurry to the electrode sheet may be performed on the electrode sheet being transferred at a predetermined speed. The transfer speed may be the same as the speed at which the negative electrode slurry is applied to the electrode sheet. For example, applying the negative electrode slurry to the electrode sheet may be performed at a speed of 5 m/min to 100 m/min, more particularly at a speed of 5 m/min to 35 m/min; 10 m/min to 35 m/min; 20 m/min to 35 m/min; 10 m/min to 30 m/min; 5 m/min to 20 m/min; 5 m/min to 25 m/min; or 15 m/min to 25 m/min.

An embodiment of the present invention can prevent a uniform application of the negative electrode slurry on the surface of the electrode sheet due to a significantly slower application speed by performing applying the negative electrode slurry within the above speed range. Along with this, the process efficiency and productivity can be prevented from being reduced; and the crystal alignment state of the carbon-based negative electrode active material present in the negative electrode slurry can be prevented from being disrupted due to the excessively high speed, resulting in a reduced degree of orientation.

In addition, the method of manufacturing a negative electrode for a secondary battery according to an embodiment of the present invention may further include applying a magnetically applied negative electrode slurry to an electrode sheet, followed by drying the applied negative electrode slurry to form a negative electrode active layer.

Forming a negative electrode active layer refers to a process of fixing a carbon-based negative electrode active material contained in a negative electrode slurry onto an electrode sheet by drying the negative electrode slurry. This step may be applied, without limitation, in any manner in which the carbon-based negative electrode active material in the cathode slurry applied to the electrode sheet can be fixed with minimal loss of its degree of orientation with respect to the surface of the electrode sheet.

Specifically, the drying may be applied by applying energy such as light, wavelength, heat, or the like, and may be performed by using an ultraviolet dryer, a near-infrared dryer, a far-infrared dryer, a hot air dryer, a vacuum oven, or the like, singly or in combination.

Meanwhile, the carbon-based negative electrode active material contained in the negative electrode slurry may include one conventionally applied as a carbon-based negative electrode active material in a lithium secondary battery. Specifically, the carbon-based negative electrode active material refers to a material having carbon atoms as a main component. Such a carbon-based negative electrode active material may include graphite. The graphite may include one or more of natural graphite, artificial graphite, but preferably natural graphite, or a mixture of natural graphite and artificial graphite.

Preferably, the carbon-based negative electrode active material is a spherical graphite particle formed by a plurality of flake graphite. The flake graphite may include natural graphite, artificial graphite, mesophase calcined carbon (bulk mesophase) based on tar and pitch, graphitized coke (raw coke, green coke, pitch coke, needle coke, petroleum coke, etc.), and the like, and is preferably assembled using a plurality of highly crystalline natural graphite. Furthermore, one graphite particle may be formed by assembling from 2 to 100, preferably from 3 to 20, pieces of flake-shaped graphite.

Such carbon-based negative electrode active material, specifically graphite, may have a spherical particle shape, wherein the sphericity of the graphite particles may be greater than or equal to 0.75, such as 0.75 to 1.0; 0.75 to 0.95; 0.8 to 0.95; or 0.90 to 0.99. Here, "sphericity" may mean the ratio of the shortest diameter (short diameter) to the longest diameter (long diameter) of any diameter passing through the center of the particle, wherein a sphericity of 1 means that the particle has a spherical shape. The sphericity degree may be measured by a particle shape analyzer. An embodiment of the present invention can realize a high electrical conductivity of the negative electrode active layer by realizing a shape of the carbon-based negative electrode active material close to a spherical shape, thereby improving the capacity of the battery. An embodiment of the present invention also has the advantage that the specific surface area of the negative electrode active material can be increased, and thus the adhesion between the negative electrode active layer and the current collector can be improved.

Further, the carbon-based negative electrode active material may exhibit an average particle diameter (D50) of 0.5 µm to 10 µm, and more particularly, may exhibit an average particle diameter (D50) of 2 µm to 7 µm; 0.5 µm to 5 µm; or 1 µm to 3 µm.

The average particle diameter of spherical natural graphite may be advantageous to have a smaller particle diameter to maximize the disorder in the direction of expansion for each of the particles to prevent the particles from swelling upon charging of the lithium ions. However, when the particle diameter of natural graphite is less than 0.5 µm, a large amount of binder is required due to the increase in the number of particles per unit volume, and the sphericity degree and sphericity transport number may be lower. On the other hand, when the maximum particle diameter exceeds 10 µm, the expansion becomes severe, and the binding property between the particles and the binding property of the particles to the current collector decreases as the charge and discharge are repeated, which may significantly reduce the cycling characteristics.

In addition, the negative electrode slurry may further include conductive materials, binders, thickeners, and the like in addition to the carbon-based negative electrode active material, and these may be applied as those conventionally used in the art.

The conductive material may include one or more of carbon black, acetylene black, ketene black, carbon nanotubes, carbon fibers, and the like, but is not limited thereto.

As one example, said negative electrode active layer may contain carbon black, carbon nanotubes, carbon fibers, and the like as conductive materials alone or in combination.

In this case, the content of the conductive material may be 0.1 to 10 parts by weight, and more specifically, 0.1 to 8 parts by weight, 0.1 to 5 parts by weight, 0.1 to 3 parts by weight, 2 to 6 parts by weight, or 0.5 to 2 parts by weight, relative to the total 100 parts by weight of the negative electrode active layer. An embodiment of the present invention can control the content of the conductive material to a range as described above, thereby preventing the resistance of the negative electrode from increasing due to a low content of the conductive material, thereby reducing the charging capacity. Also, it is possible to prevent a problem in which the charging capacity is reduced due to a decrease in the content of the negative electrode active material due to an excessive amount of conductive material, or a problem in which the rapid charging characteristic is reduced due to an increase in the loading amount of the negative electrode active layer.

Further, the binder may be suitably applied as a component that assists in the bonding of the negative electrode active material to the conductive material and the bonding to the negative electrode current collector without degrading the electrical properties of the electrode, but more particularly, the binder may be applied to vinylidene fluoride-hexafluoropropylene copolymer (PVDF-co-HFP), polyvinylidenefluoride (PVdF), polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer, sulfonated ethylene-propylene-diene monomer, styrene butadiene rubber, and fluorinated rubber, including any one or more thereof.

The content of the binder may be from 0.1 to 10 parts by weight, more specifically from 0.1 to 8 parts by weight, from 0.1 to 5 parts by weight, from 0.1 to 3 parts by weight, or from 2 to 6 parts by weight, based on a total of 100 parts by weight of the negative electrode slurry. An embodiment of the present invention can control the content of the binder contained in the negative electrode slurry to the above range, thereby preventing the adhesion of the negative electrode active layer from deteriorating due to a low content of the binder or the electrical properties of the electrode from deteriorating due to an excess of the binder.

The method of manufacturing a sheet for a negative electrode of a secondary battery according to an embodiment of the present invention has the advantage of having the above-described composition, which enables the carbon-based negative electrode active material of the applied negative electrode slurry on the current collector to be uniformly aligned with a high degree of orientation.

### Secondary Battery Negative Electrode

Further, an embodiment of the present invention provides,
a secondary battery negative electrode prepared by the method described above.

The negative electrode for a lithium secondary battery according to an embodiment of the present invention includes a negative electrode active layer including a carbon-based negative electrode active material as a main component on at least one side of the current collector. The negative electrode active layer refers to a layer that embodies the electrical activity of the negative electrode. The negative electrode active layer is prepared by applying an electrode slurry including a carbon-based negative electrode active material embodying an oxidation reduction reaction electrochemically during charging and discharging of the secondary battery to both sides of the current collector, followed by drying and rolling. Here, the negative electrode active layer is formed by applying and drying a magnetically applied negative electrode slurry to an electrode sheet using the aforementioned negative electrode manufacturing device, wherein the main component, a carbon-based negative electrode active material, is characterized by a high crystal orientation with respect to the surface of the electrode sheet, and thereby has a high energy density and charge/discharge performance.

Specifically, the negative electrode according to an embodiment of the present invention can be aligned such that the carbon-based negative electrode active material contained in the negative electrode active layer has a predetermined angle with respect to the electrode sheet (or the negative electrode current collector). Such alignment of the carbon-based negative electrode active material may serve to reduce the degree of disorder in the negative electrode active layer, thereby reducing the electrode resistance and providing a movement path for the lithium ions. At this time, the crystal orientation of the carbon-based negative electrode active material (e.g., graphite) may be determined by crystallographic analysis of the carbon-based negative electrode active material contained in the negative electrode active layer.

In one example, the negative electrode active layer may be such that the carbon-based negative electrode active material is aligned in a certain direction with respect to the current collector, such that an X-ray diffraction spectroscopy (XRD) measurement of the negative electrode active layer satisfies an average alignment degree (O.I.) of the carbon-based negative electrode active material of 0.9 or less, as represented by Equation 2 below: $O . I . = {I}_{004} / {I}_{110}$
in Equation 2,
I₀₀₄ indicates the area of the peak representing the [0,0,4] crystal face in an X-ray diffraction spectroscopy (XRD) measurement of the negative electrode active layer,
I₁₁₀ indicates the area of the peak representing the [1,1,0] crystal face in an X-ray diffraction spectroscopy (XRD) measurement of the negative electrode active layer.

The above equation 2 may be an indicator of the degree to which the crystal structure of the spherical carbon-based negative electrode active material is aligned in a certain direction, specifically with respect to the surface of the negative electrode current collector, upon X-ray diffraction measurement. More specifically, the negative electrode active layer may be aligned with the peaks for the carbon-based negative electrode active material, graphite, at 2θ=26.5±0.2°, 42.4±0.2°, 43.4±0. 2°, 44.6±0.2°, 54.7±0.2°, and 77.5±0.2°, which represent the [0,0,2] face, [1,0,0] face, [1,0,1]R face, [1,0,1]H face, [0,0,4] face, and [1,1,0] face, respectively. Also, the peak appearing at 2θ=43.4±0.2° may be viewed as an overlap of the peaks corresponding to the [1,0,1]R face of a carbon-based negative electrode active material and the [1,1,1] face of a current collector, such as copper (Cu).

Among them, the degree of alignment (O.I.) of the carbon-based negative electrode active material can be measured by the ratio of the area of the peak at 2θ=77.5±0.2° representing the [1,1,0] face and the peak at 2θ=54.7±0.2° representing the [0,0,4] face, specifically, the ratio of the areas obtained by integrating the intensities of the peaks. Here, since the peak at 2θ=54.7±0.2° is a peak representing the [0,0,4] face having an inclination with the negative electrode current collector among the crystal faces of graphite, the degree of alignment (O.I.) may mean that the inclination with respect to the surface of the negative electrode current collector is close to 90° when the value is close to 0, and the inclination with respect to the surface of the negative electrode current collector is close to 0° or 180° when the value is larger. In this aspect, the negative electrode active layer according to an embodiment of the present invention may have a lower degree of alignment (O.I.) of the carbon-based negative electrode active material compared to a case where the carbon-based negative electrode active material is not self-aligned, since the carbon-based negative electrode active material is aligned such that the carbon-based negative electrode active material has an angle close to perpendicular to the negative current collector, such as an angle of 60° or more, 70° or more, 70-90°, 80-90°, 65-85°, or 70-85° relative to the negative current collector.

The negative electrode according to an embodiment of the present invention may have an alignment degree index (O.I.) according to Equation 2 of 0.9 or less when measured by X-ray diffraction with respect to a surface of the negative electrode active layer, more specifically, it may be 0.8 or less; 0.7 or less; 0.6 or less; 0.1 to 0.9; 0.2 to 0.8; 0.3 to 0.7; 0.2 to 0.6; or 0.4 to 0.6.

Meanwhile, the average thickness of said negative electrode active layer may be from 50 µm to 300 µm, more specifically from 50 µm to 250 µm; from 100 µm to 250 µm; or from 100 µm to 200 µm. An embodiment of the present invention can not only increase the energy density of the electrode by adjusting the average thickness of the negative electrode active layer to the above range, but can also uniformly control the disorder of the carbon-based negative electrode active material contained in the negative electrode active layer.

In addition, the negative electrode current collector is not particularly limited as long as it has a high conductivity without causing chemical changes in the battery. For example, copper, stainless steel, nickel, titanium, calcined carbon, and the like can be used as the negative electrode collector, and in the case of copper or stainless steel, a surface treatment with carbon, nickel, titanium, silver, and the like can also be used. Moreover, the average thickness of the said negative electrode current collector may be suitably applied from 1 to 500 µm in consideration of the conductivity and total thickness of the negative electrode to be manufactured.

Hereinafter, the present invention will be described in more detail by way of examples and experimental examples.

However, the following examples and experimental examples are only illustrative of the present invention, and the present invention is not limited to the following examples and experimental examples.

### Examples 1 to 5 and Comparative Examples 1 to 2. Manufacturing Sheet for Secondary Battery Negative Electrode

First, natural graphite and artificial graphite were prepared as carbon-based negative electrode active materials (average particle diameter: 4±1 µm, sphericity: 0.94±0.2), and a first negative electrode slurry and a second negative electrode slurry were prepared using the prepared carbon-based active materials.

Specifically, the first negative electrode slurry was prepared by mixing natural graphite and artificial graphite in a 2:8 weight ratio to prepare a negative electrode active material, and carbon black as a conductive material and carboxymethylcellulose (CMC) and styrene butadiene rubber (SBR) as binders. A first negative electrode slurry was prepared by mixing 95 parts by weight of mixed graphite, 1 part by weight of carbon black, 1.5 parts by weight of carboxymethylcellulose (CMC), and 2.5 parts by weight of styrene butadiene rubber (SBR) with water, where the first negative electrode slurry was 50% solids.

Further, the second negative electrode slurry was prepared by the same method as the first negative electrode slurry, but using only artificial graphite as the carbon-based negative electrode active material. In addition, the viscosity of the prepared first negative electrode slurry and the second negative electrode slurry was adjusted to 6300±200 cps at 25°C.

Separately, a negative electrode manufacturing device was prepared including a dual slot die having a first slot and a second slot in which an upper block, a first spacer, a middle block, a second spacer, and a lower block are sequentially stacked to provide a first slot and a second slot in which a negative electrode slurry can be discharged at the front end, and a coating roll arranged to face the slots of the slot die. At this time, the negative electrode manufacturing device was adjusted in that i) the polarity type of the magnetism imparted to the upper lip of the upper block, the middle lip of the middle block, and the lower lip of the lower block; ii) the magnetic field intensity applied to the lip part including the upper lip, the middle lip, and the lower lip; and iii) the ratio (G/M) of the magnetic field intensity (G) applied to the lip part and the moving speed (M) of the copper thin plate (in other words, the electrode sheet) were adjusted as shown in Table 1 below.

The previously prepared negative electrode slurry was injected into the prepared negative electrode manufacturing device, and the negative electrode slurry was applied to the surface of a copper thin plate (thickness: 8 µm) being transported at a speed (M) of 10 m/min. Then, hot air was continuously applied to the applied negative electrode slurry to dry it to form a negative electrode active layer.

**[Table 1]**

| | Upper lip | Middle lip | Lower lip | Coating roll | Magnetic field strength of lip part [G] | Gₗᵢₚ/Gᵣₒₗₗ |
|---|---|---|---|---|---|---|
| Example 1 | N pole | N pole | N pole | S pole | 100 | 0.03 |
| Example 2 | N pole | N pole | N pole | S pole | 1,500 | 0.5 |
| Example 3 | N pole | N pole | N pole | S pole | 3,300 | 1.1 |
| Example 4 | N pole | N pole | N pole | S pole | 1,500 | 0.1 |
| Example 5 | N pole | N pole | N pole | S pole | 1,500 | 1.5 |
| Comparative Example 1 | - | - | - | - | - | - |
| Comparative Example 2 | N pole | S pole | N pole | S pole | 1,500 | 0.5 |
| Comparative Example 3 | N pole | N pole | N pole | N pole | 1,500 | 0.5 |

### Experimental Example

The orientation exhibited by the carbon-based negative electrode active material of the cathodes for secondary batteries manufactured using the negative electrode manufacturing device according to an embodiment of the present invention was evaluated.

Specifically, X-ray diffraction spectroscopy (XRD) of any three points of the negative electrode active layer was performed for each negative electrode prepared in Examples 1 to 5 and Comparative Examples 1 to 2, and the spectra were measured. The measurement conditions for X-ray diffraction (XRD) were as follows:
- Target: Cu(Kα-ray) graphite single-colorization device
- Slit: Emission slit = 1 degree, Reception slit = 0.1 mm, Scattering slit = 1 degree
- Measurement section: [1,1,0] face: 76.5° < 2θ < 78.5° ; [0,0,4] face: 53.5° < 2θ < 56.0° .

From the spectrum measured under the above conditions, the alignment degree (O.I.) of each carbon-based negative electrode active material according to Equation 2 was calculated, and the average alignment degree was obtained from the alignment degrees (O.I.) of the carbon-based negative electrode active materials of the three points calculated. The results are shown in Table 2. $O . I = {I}_{004} / {I}_{110}$ in Equation 2,
I₀₀₄ indicates the area of the peak representing the [0,0,4] crystal face in the X-ray diffraction spectroscopy (XRD) measurement of the negative electrode active layer, and
I₁₁₀ indicates the area of the peak representing the [1,1,0] crystal face in an X-ray diffraction spectroscopy (XRD) measurement of the negative electrode active layer.

**[Table 2]**

| | Average alignment degree |
|---|---|
| Example 1 | 1.03 |
| Example 2 | 0.45 |
| Example 3 | 0.81 |
| Example 4 | 0.65 |
| Example 5 | 0.59 |
| Comparative Example 1 | 5.24 |
| Comparative Example 2 | 5.83 |
| Comparative Example 3 | 6.41 |

As shown in Table 2 above, it can be seen that the negative electrode manufactured using the negative electrode manufacturing device according to an embodiment of the present invention has a high degree of orientation of the carbon-based negative electrode active material contained in the negative electrode active layer.

This means that when the front ends of the upper block, the middle block, and the lower block comprising the dual slot die, in other words, each lip part, are magnetized with the same polarity at the time of discharging the negative electrode slurry, and then the negative electrode slurry is applied to the electrode sheet (or the cathode collector) at a predetermined speed, the crystal face of the carbon-based negative electrode active material with respect to the electrode sheet is oriented close to perpendicular with respect to the electrode sheet before the negative electrode slurry is discharged, and the carbon-based negative electrode active material is applied and maintained on the electrode sheet in such an orientation-induced state to form a negative electrode active layer.

From these results, the negative electrode manufacturing device according to an embodiment of the present invention has the advantage that the carbon-based negative electrode active material in the discharged negative electrode slurry can be applied in a state in which the carbon-based negative electrode active material is oriented at a predetermined angle with respect to the surface of the current collector, so that the carbon-based negative electrode active material of the manufactured negative electrode not only has an excellent degree of orientation, but also has the advantage of being easy to apply to a mass production process.

As above, the present invention has been described in more detail through the drawings and embodiments. However, since the configuration described in the drawings or embodiments described herein is merely one embodiment of the present invention, it should be understood that the invention covers various equivalents, modifications, and substitutions at the time of filing of this application.

Thus, the technical scope of the present invention is not limited to what is described in the detailed description of the specification, but should be determined by the claims of the patent.

### [Description of Reference Numerals]

| | | | |
|---|---|---|---|
| 10: | negative electrode manufacturing device for secondary battery | | |
| 100: | dual die coater | 110: | upper die |
| 111: | upper lip | 112: | upper body |
| 120: | middle die | 121: | middle lip |
| 122: | middle body | 130: | lower die |
| 130a: | opening | 140: | discharge slot |
| 200: | coating roll | 210: | coating roll magnet |
| 300: | electrode sheet | | |
| A: | unoriented section | B: | oriented section |
| I: | body part | II: | lip part |
| III: | coating region | | |
| MD: | magnetic field direction | CM: | carbon-based negative electrode active material |

## Claims

1. A negative electrode manufacturing device for a secondary battery (10) configured to apply a negative electrode slurry containing a carbon-based negative electrode active material (CM) comprising graphite on an electrode sheet (300),
the negative electrode manufacturing device for the secondary battery (10) comprising:
a dual slot die (100) comprising an upper block; a middle block; a lower block; a first slot (151); and a second slot (152), wherein the first slot (151) is a gap disposed between the upper block and the middle block and is configured to discharge a first negative electrode slurry, and wherein the second slot (152) is a gap disposed between the middle block and the lower block and is configured to discharge a second negative electrode slurry; and
a coating roll (200) disposed opposite to the first and second slots (151, 152) of the dual slot die (100) and configured to transfer the electrode sheet (300), wherein the electrode sheet (300) is configured to accommodate the first and second negative electrode slurries,
wherein the upper block, the middle block, and the lower block comprise an upper lip (111), a middle lip (121), and a lower lip (131), respectively, so as to define an outlet at a front end of each of the upper, middle, and lower lips (111, 121, 131), **characterized in that** each of the upper , middle, and lower lips (111, 121, 131) have a magnetism of a same polarity; and
**in that** the coating roll (200) has a magnetism of a polarity opposite to the same polarity of the upper lip (111).

2. The negative electrode manufacturing device (10) of claim 1, wherein the upper lip (111), the middle lip (121) and the lower lip (131) have a magnetic field having an intensity in a range of 500G to 3,000G, and
wherein the upper, middle, and lower lips (111, 121, 131) are configured to apply the magnetic field upon discharging of the negative electrode slurry.

3. The negative electrode manufacturing device (10) of claim 1, wherein
the dual slot die (100) satisfies Equation 1: ${G}_{lip} / {G}_{roll} \leq 1$
wherein Gₗᵢₚ represents a magnetic field strength (in G) applied to the upper lip (111), the middle lip (121), and the lower lip (131), and
wherein Gᵣₒₗₗ represents a magnetic field strength (in G) applied to the coating roll (200).

4. The negative electrode manufacturing device (10) of claim 1, wherein the upper lip (111), middle lip (121), and lower lip (131) have a structure comprising at least one of a permanent magnet or an electromagnet.

5. The negative electrode manufacturing device (10) of claim 1, further comprising a drying part configured to dry the negative electrode slurry applied to the electrode sheet (300), and
wherein the drying part is disposed in a position such that the negative electrode slurry discharged from the dual slot die (100) can be reached within a time frame of 20 seconds from a time the negative electrode slurry is applied to the electrode sheet (300).

6. A method of manufacturing a negative electrode for the secondary battery comprising:
magnetically applying the negative electrode slurry to the electrode sheet (300) using the negative electrode manufacturing device according to claim 1,
wherein the negative electrode slurry comprises the carbon-based negative electrode active material (CM).

7. The method of manufacturing of claim 6, wherein an average thickness of the negative electrode slurry applied to the electrode sheet (300) is greater than a separation distance between the first and second slots (151, 152) of the dual slot die (100) and the coating roll (200).

8. The method of manufacturing of claim 6, wherein an average thickness of the negative electrode slurry applied to the electrode sheet (300) is in a range of 100 µm or more.

9. The method of manufacturing of claim 6, wherein in the magnetically applying, the negative electrode slurry is applied to the electrode sheet (300) a speed in a range of 5 m/min to 100 m/min.

10. The method of manufacturing of claim 6, further comprising, drying the negative electrode slurry disposed on the electrode sheet (300) to form a negative electrode active layer.

11. The method of manufacturing of claim 10, wherein the negative electrode active layer has an alignment degree of the carbon-based negative electrode active material with respect to a surface of the electrode sheet (300) in a range of 0.9 or less, represented by Equation 2: $O . I . = {I}_{004} / {I}_{110}$
wherein I₀₀₄ indicates an area of a peak representing a [0,0,4] crystal face in an X-ray diffraction spectroscopy (XRD) measurement of the negative electrode active layer, and
wherein I₁₁₀ indicates an area of a peak representing a [1,1,0] crystal face in the X-ray diffraction spectroscopy (XRD) measurement of the negative electrode active layer.

## Patentansprüche

1. Vorrichtung zur Herstellung einer negativen Elektrode für eine Sekundärbatterie (10), die konfiguriert ist, um eine negative Elektrodenslurry, die ein auf Kohlenstoff basierendes negatives Elektrodenaktivmaterial (CM) mit Graphit enthält, auf ein Elektrodenblatt (300) aufzutragen,
wobei die Vorrichtung zur Herstellung der negativen Elektrode für die Sekundärbatterie (10) umfasst:
eine Doppelschlitzdüse (100), die einen oberen Block, einen mittleren Block, einen unteren Block, einen ersten Schlitz (151) und einen zweiten Schlitz (152) umfasst, wobei der erste Schlitz (151) ein Spalt ist, der zwischen dem oberen Block und dem mittleren Block angeordnet ist und konfiguriert ist, um eine erste negative Elektrodenslurry abzugeben, und wobei der zweite Schlitz (152) ein Spalt ist, der zwischen dem mittleren Block und dem unteren Block angeordnet ist und konfiguriert ist, um eine zweite negative Elektrodenslurry abzugeben; und
eine Beschichtungswalze (200), die gegenüber dem ersten und zweiten Schlitz (151, 152) der Doppelschlitzdüse (100) angeordnet ist und konfiguriert ist, um das Elektrodenblatt (300) zu transferieren, wobei das Elektrodenblatt (300) konfiguriert ist, um die erste und die zweite negative Elektrodenslurry aufzunehmen,
wobei der obere Block, der mittlere Block und der untere Block eine obere Lippe (111), eine mittlere Lippe (121) bzw. eine untere Lippe (131) umfassen, um einen Auslass an einem vorderen Ende jeder der oberen, mittleren und unteren Lippen (111, 121, 131) zu definieren,
**dadurch gekennzeichnet, dass**
jede der oberen, der mittleren und der unteren Lippe (111, 121, 131) einen Magnetismus derselben Polarität aufweist; und
dass die Beschichtungswalze (200) einen Magnetismus einer Polarität aufweist, die der gleichen Polarität der oberen Lippe (111) entgegengesetzt ist.

2. Vorrichtung zur Herstellung einer negativen Elektrode (10) nach Anspruch 1, wobei die obere Lippe (111), die mittlere Lippe (121) und die untere Lippe (131) ein Magnetfeld mit einer Intensität im Bereich von 500 G bis 3.000 G aufweisen, und
wobei die obere, die mittlere und die untere Lippe (111, 121, 131) konfiguriert sind, um das Magnetfeld beim Abgeben der negativen Elektrodenslurry anzulegen.

3. Vorrichtung zur Herstellung einer negativen Elektrode (10) nach Anspruch 1, wobei die Doppelschlitzdüse (100) die Gleichung 1 erfüllt: $\frac{{G}_{lip}}{{G}_{roll}} \leq 1$
wobei Gₗᵢₚ eine Magnetfeldstärke (in G) darstellt, die an die obere Lippe (111), die mittlere Lippe (121) und die untere Lippe (131) angelegt wird, und
wobei Gᵣₒₗₗ eine Magnetfeldstärke (in G) darstellt, die an die Beschichtungswalze (200) angelegt wird.

4. Vorrichtung zur Herstellung einer negativen Elektrode (10) nach Anspruch 1, wobei die obere Lippe (111), die mittlere Lippe (121) und die untere Lippe (131) eine Struktur aufweisen, die mindestens einen von einem Permanentmagneten oder einem Elektromagneten umfasst.

5. Vorrichtung zur Herstellung einer negativen Elektrode (10) nach Anspruch 1, ferner umfassend ein Trocknungsteil, das konfiguriert ist, um die auf das Elektrodenblatt (300) aufgebrachte negative Elektrodenslurry zu trocknen, und
wobei das Trocknungsteil derart in einer Position angeordnet ist, dass die aus der Doppelschlitzdüse (100) abgegebene negative Elektrodenslurry innerhalb eines Zeitraums von 20 Sekunden ab dem Zeitpunkt, zu dem die negative Elektrodenslurry auf das Elektrodenblatt (300) aufgetragen wird, erreicht werden kann.

6. Verfahren zur Herstellung einer negativen Elektrode für die Sekundärbatterie,
umfassend:
magnetisches Aufbringen der negativen Elektrodenslurry auf das Elektrodenblatt (300) unter Verwendung der Vorrichtung zur Herstellung einer negativen Elektrode nach Anspruch 1,
wobei die negative Elektrodenslurry das auf Kohlenstoff basierende negative Elektrodenaktivmaterial (CM) umfasst.

7. Herstellungsverfahren nach Anspruch 6, wobei eine durchschnittliche Dicke der auf das Elektrodenblatt (300) aufgebrachten negativen Elektrodenslurry größer ist als ein Trennungsabstand zwischen dem ersten und dem zweiten Schlitz (151, 152) der Doppelschlitzdüse (100) und der Beschichtungswalze (200).

8. Herstellungsverfahren nach Anspruch 6, wobei eine durchschnittliche Dicke der auf das Elektrodenblatt (300) aufgebrachten negativen Elektrodenslurry in einem Bereich von 100 µm oder mehr liegt.

9. Herstellungsverfahren nach Anspruch 6, wobei beim magnetischen Aufbringen die negative Elektrodenslurry auf das Elektrodenblatt (300) mit einer Geschwindigkeit im Bereich von 5 m/min bis 100 m/min aufgebracht wird.

10. Herstellungsverfahren nach Anspruch 6, ferner umfassend das Trocknen der auf dem Elektrodenblatt (300) angeordneten negativen Elektrodenslurry, um eine negative Elektrodenaktivschicht zu bilden.

11. Herstellungsverfahren nach Anspruch 10, wobei die negative Elektrodenaktivschicht einen Ausrichtungsgrad des auf Kohlenstoff basierenden negativen Elektrodenaktivmaterials in Bezug auf eine Oberfläche des Elektrodenblatts (300) in einem Bereich von 0,9 oder weniger aufweist, dargestellt durch Gleichung 2: $O . I . = \frac{{I}_{004}}{{I}_{110}}$
wobei I₀₀₄ eine Fläche eines Peaks angibt, der eine [0,0,4]-Kristallfläche in einer Röntgenbeugungsspektroskopie(XRD)-Messung der negativen Elektrodenaktivschicht darstellt, und
wobei I₁₁₀ eine Fläche eines Peaks angibt, der eine [1,1,0]-Kristallfläche in der Röntgenbeugungsspektroskopie(XRD)-Messung der negativen Elektrodenaktivschicht darstellt.

## Revendications

1. Dispositif de fabrication d'électrode négative pour une batterie secondaire (10) configuré pour appliquer une suspension d'électrode négative contenant un matériau actif d'électrode négative à base de carbone (CM) comprenant du graphite sur une feuille d'électrode (300),
le dispositif de fabrication d'électrode négative pour la batterie secondaire (10) comprenant :
une filière à fente double (100) comprenant un bloc supérieur ;
un bloc intermédiaire ;
un bloc inférieur;
une première fente (151) ;
et une seconde fente (152),
dans lequel la première fente (151) est un espace disposé entre le bloc supérieur et le bloc intermédiaire et est configurée pour décharger une première suspension d'électrode négative, et dans lequel la seconde fente (152) est un espace disposé entre le bloc intermédiaire et le bloc inférieur et est configurée pour décharger une seconde suspension d'électrode négative ; et
un rouleau de revêtement (200) disposé à l'opposé des première et seconde fentes (151, 152) de la filière à fente double (100) et configuré pour transférer la feuille d'électrode (300), dans lequel la feuille d'électrode (300) est configurée pour recevoir les première et seconde suspensions d'électrode négative,
dans lequel le bloc supérieur, le bloc intermédiaire, et le bloc inférieur comprennent respectivement une lèvre supérieure (111), une lèvre intermédiaire (121), et une lèvre inférieure (131), de manière à définir une sortie à une extrémité avant de chacune des lèvres supérieure, intermédiaire et inférieure (111, 121, 131),
**caractérisé en ce que** chacune des lèvres supérieure, intermédiaire et inférieure (111, 121, 131) a un magnétisme de même polarité ; et
**en ce que** le rouleau de revêtement (200) a un magnétisme d'une polarité opposée à la même polarité de la lèvre supérieure (111).

2. Dispositif de fabrication d'électrode négative (10) selon la revendication 1, dans lequel la lèvre supérieure (111), la lèvre intermédiaire (121) et la lèvre inférieure (131) ont un champ magnétique ayant une intensité dans une plage de 500 G à 3 000 G, et
dans lequel les lèvres supérieure, intermédiaire et inférieure (111, 121, 131) sont configurées pour appliquer le champ magnétique lors de la décharge de la suspension d'électrode négative.

3. Dispositif de fabrication d'électrode négative (10) selon la revendication 1, dans lequel la filière à fente double (100) satisfait à l'équation 1 : $\frac{{G}_{lip}}{{G}_{roll}} \leq 1$
dans laquelle Gₗᵢₚ représente une intensité de champ magnétique (en G) appliquée à la lèvre supérieure (111), la lèvre intermédiaire (121), et la lèvre inférieure (131), et
dans laquelle Gᵣₒₗₗ représente une intensité de champ magnétique (en G) appliquée au rouleau de revêtement (200).

4. Dispositif de fabrication d'électrode négative (10) selon la revendication 1, dans lequel la lèvre supérieure (111), la lèvre intermédiaire (121), et la lèvre inférieure (131) ont une structure comprenant au moins un aimant parmi un aimant permanent ou un électroaimant.

5. Dispositif de fabrication d'électrode négative (10) selon la revendication 1, comprenant en outre une partie de séchage configurée pour sécher la suspension d'électrode négative appliquée à la feuille d'électrode (300), et
dans lequel la partie de séchage est disposée dans une position telle que la suspension d'électrode négative déchargée de la filière à fente double (100) peut être atteinte dans un laps de temps de 20 secondes à partir du moment où la suspension d'électrode négative est appliquée à la feuille d'électrode (300).

6. Procédé de fabrication d'une électrode négative pour la batterie secondaire comprenant :
l'application magnétique de la suspension d'électrode négative sur la feuille d'électrode (300) en utilisant le dispositif de fabrication d'électrode négative selon la revendication 1,
dans lequel la suspension d'électrode négative comprend le matériau actif d'électrode négative à base de carbone (CM).

7. Procédé de fabrication selon la revendication 6, dans lequel une épaisseur moyenne de la suspension d'électrode négative appliquée à la feuille d'électrode (300) est supérieure à une distance de séparation entre les première et seconde fentes (151, 152) de la filière à fente double (100) et le rouleau de revêtement (200).

8. Procédé de fabrication selon la revendication 6, dans lequel une épaisseur moyenne de la suspension d'électrode négative appliquée à la feuille d'électrode (300) est dans une plage de 100 µm ou plus.

9. Procédé de fabrication selon la revendication 6, dans lequel, lors de l'application magnétique, la suspension d'électrode négative est appliquée à la feuille d'électrode (300) à une vitesse dans une plage de 5 m/min à 100 m/min.

10. Procédé de fabrication selon la revendication 6, comprenant en outre le séchage de la suspension d'électrode négative disposée sur la feuille d'électrode (300) pour former une couche active d'électrode négative.

11. Procédé de fabrication selon la revendication 10, dans lequel la couche active d'électrode négative a un degré d'alignement du matériau actif d'électrode négative à base de carbone par rapport à une surface de la feuille d'électrode (300) dans une plage de 0,9 ou moins, représenté par l'équation 2 : $O . I . = \frac{{I}_{004}}{{I}_{110}}$
dans laquelle I₀₀₄ indique une aire d'un pic représentant une direction cristalline [0,0,4] dans une mesure de spectroscopie de diffraction des rayons X (DRX) de la couche active d'électrode négative, et
dans laquelle I₁₁₀ indique une aire d'un pic représentant une direction cristalline [1,1,0] dans la mesure de spectroscopie de diffraction des rayons X (DRX) de la couche active d'électrode négative.
